# EUROPÄISCHE PATENTSCHRIFT

(11) **EP 1 493 777 B1**
(45) Veröffentlichungstag und Bekanntmachung des Hinweises auf die Patenterteilung: **28.11.2007**
(21) Anmeldenummer: 04013941.2
(22) Anmeldetag: 15.06.2004
(51) Int. Cl.: C08K 7/24, C04B 14/30

(54) **Formteile, enthaltend einen Kunststoff sowie poröse Füllstoffpartikeln mit gefüllten Hohlräumen**
Moulding parts comprising resin and porous filler particles having filled cavities
Objets moulés comprenant résine et particules de charges poreuses ayant des cavités remplies

(30) Priorität: 30.06.2003 DE 10329583
(43) Veröffentlichungstag der Anmeldung: 05.01.2005
(73) Patentinhaber: Behr GmbH & Co. KG, 70469 Stuttgart (DE)
(72) Erfinder: Wolf, Walter, 71570 Oppenweiler-Zell (DE)

(56) Entgegenhaltungen:
- EP-A- 0 296 052
- DE-A- 2 530 657
- GB-A- 1 373 236
- GB-A- 2 094 748
- US-A- 4 303 732
- US-A- 4 349 456
- US-A- 4 670 303

## Beschreibung

Die Erfindung bezieht sich auf einen Werkstoff für Formteile, auf ein derartiges Formteil an sich, auf ein Verfahren zur Herstellung eines derartigen Formteils und auf eine Verwendung eines derartigen Formteils.

Für einen Werkstoff wird als Basisstoff häufig ein Kunststoff insbesondere ein Thermoplast, Duroplast oder Elastomer eingesetzt. Zu den wichtigsten Eigenschaften dieser genannten Kunststoff-Werkstoffe zählen verschiedene Verarbeitungsmöglichkeiten, wie z. B. Spritzgießen und Extrudieren. Dadurch ist eine vielfältige Formgebung ermöglicht, so dass diese Kunststoffe als zudem kostengünstige Alternative zu metallischen Werkstoffen für den Einsatz in vielen industriellen Gebieten geeignet sind.

Beim Spritzgießen wird ein Pulver oder Granulat aus Kunststoff in einer Spritzeinheit zu einer Formmasse aufgeschmolzen und in ein beheiztes Spritzgieß-Werkzeug eingespritzt. In diesem Werkzeug ist ein strukturierter Formeinsatz eingebaut, der komplett mit der Formmasse gefüllt wird. Nach dem Abkühlen und Öffnen des Werkzeugs werden die spritzgegossenen Teile entnommen.

Extrudieren bedeutet Strangpressen mit Schneckenpressen, den sog. Extrudem. Die pulver- oder granulatförmige Formmasse wird durch die Schnecke aufgenommen, transportiert und durch Reibung und zusätzliche Heizung plastifiziert. Beim weiteren Transport durch die Schnecke erhöht sich der Druck, und die formbare Masse wird durch eine nachgeschaltete Düse in Form eines Stranges ausgepreßt. Je nach Düsenform werden spezielle Formteile wie beispielsweise Profile, Bänder, Bahnen, Rohre, Schläuche, Fäden, Stäbe, Platten u.a. erzeugt, so dass die Produktpalette besonders reichhaltig ist.

Durch Zugaben vor und/ oder während eines solchen Formgebungsprozesses können den Werkstoffen spezifisch gewünschte Eigenschaften gegeben werden. So dient üblicherweise ein dem Basiskunststoff zugesetzter Füllstoff wie beispielsweise Glas, Holzmehl, Talkum etc. zur Erhöhung der Festigkeit, der Steifigkeit oder der Wärmestandfestigkeit der daraus gefertigten Formteile.

Im Zuge höher werdender Umweltauflagen hinsichtlich des Umgangs mit Energieressourcen in quasi allen Bereichen des täglichen Lebens sind Werkstoffe und daraus gefertigte Formteile, die Energie speichern und diese bei Bedarf beispielsweise wieder in Form von Wärme freigeben, von zunehmender Bedeutung. Besonders in der in der Automobil-, Luft- und Raumfahrtindustrie, aber auch in den Sparten Medizin, Hausgeräte-Technik, Hochbau und Elektrotechnik kommt ferner aus energetischen Gründen der Leichtbauweise eine zentrale Bedeutung zu. Dabei sollen allerdings die anderen Ursprungseigenschaften wie beispielsweise die Wärmestandfestigkeit und die Dimensionsstabilität erhalten bleiben.

Der Erfindung liegt daher die Aufgabe zugrunde, einen Werkstoff der oben genannten Art bereit zu stellen, der die Herstellung von Formteilen mit thermischen Energiespeichereigenschaften und vergleichsweise geringen Dichten und Massen bei gleichzeitiger Formstabilität ermöglicht. Des Weiteren sollen ein derartiges Formteil an sich zur Verfügung gestellt und ein besonders geeignetes Verfahren zur Herstellung eines derartigen Formteils sowie eine Verwendung eines derartigen Formteils angegeben werden.

Bezüglich des Werkstoffes für Formteile wird diese Aufgabe erfindungsgemäß gelöst, indem einem als Basisstoff vorgesehenen Kunststoff poröse Partikel eines Füllstoffes beigemischt sind, wobei Hohlräume der Partikel mit einem Phasenwechselmaterial gemäß Anspruch 1 gefüllt sind.

Die Erfindung geht dabei von der Überlegung aus, dass ein für einen besonders energiesparenden Einsatz zu verarbeitender Werkstoff derart ausgestattet sein sollte, dass er den Anforderungen der Industrie angepasst ist. Ein aus einem Werkstoff gefertigtes Formteil mit vergleichsweise hohem Gewicht hat nämlich häufig nachteilige Auswirkungen auf die Kosten. So ist beispielsweise eine leichte Bauweise von Kraftfahrzeugteilen zugunsten eines geringen Kraftstoffverbrauchs besonders gewünscht. Diese kann unter anderem dadurch begünstigt werden, dass bereits bei der Herstellung der entsprechenden Formteile in hohem Maße auf geringe Gewichtsbeiträge geachtet wird.

So sollte das Formteil in allen seinen Bestandteilen oder Komponenten eine vergleichsweise geringe Dichte aufweisen. Dabei sollten bisherige Ursprungseigenschaften beispielsweise hinsichtlich seiner Temperaturbeständigkeit und Dimensionsstabilität sowie seines Isolations- und Dämpfungsverhaltens bezüglich. Temperatur, Schall und Schwingungen nach Möglichkeit beibehalten werden. Dies sollte auch bei der Wahl eines besonders geeigneten Füllstoffes berücksichtigt werden. Dazu sind bei dem Werkstoff für Formteile dem als Basisstoff vorgesehenen Kunststoff statt eines kompakten Füllstoffes poröse Partikel eines Füllstoffs beigemischt.

Damit ein Formteil zusätzlich beispielsweise ab einem bestimmten Temperaturniveau überschüssige Wärme aus einem Raum speichert, seine Oberflächentemperatur nahezu konstant hält und später bei entsprechender Abkühlung die Wärme wieder freigibt, kann ein sogenanntes Phasenwechselmaterial eingesetzt werden, also ein Material, das einen spezifischen Temperaturbereich des Phasenwechsels und eine spezifische Wärmekapazität aufweist. Dafür sind bei dem Werkstoff für Formteile dem als Basisstoff vorgesehenen Kunststoff poröse Partikel eines Füllstoffs beigemischt, wobei die durch die Poren gebildeten Hohlräume der Partikel mit einem Phasenwechselmaterial gefüllt sind.

Ab einem bestimmten Temperaturniveau ändert dieses Material seinen Aggregatzustand (z.B. beim Erwärmen von fest nach flüssig). Dabei werden große Wärmemengen vom Phasenwechselmaterial aus dessen Umgebung aufgenommen und gespeichert. Die Materialtemperatur bleibt dabei nahezu konstant. Bei einer Abkühlung des Phasenwechselmaterials wird die gespeicherte Wärmemenge in einem bestimmten Temperaturbereich wieder freigesetzt und an die Umgebung abgegeben. Dabei vollzieht das Phasenwechselmaterial einen umgekehrten Phasenwechsel von flüssig nach fest, d.h. es kristallisiert. Auch dabei bleibt die Materialtemperatur konstant.

Die Art des Phasenwechselmaterials ist dem, vorgegebenen Betriebsbedingungen entsprechenden, Temperaturbereich oder Temperaturniveau anzupassen. Beispielsweise liegt die Phasenwechseltemperatur bei Phasenwechselmaterialien, die im Bereich der Klimatisierung von Fahrzeugen eingesetzt werden, zwischen 18°C und 26°C, insbesondere zwischen 20°C und 24°C.

Bevorzugte Ausgestaltungen des entsprechenden Werkstoffes für Formteile sind in den Unteransprüchen beschrieben.

Zur Vereinbarung sich eigentlich widersprechender Anforderungen, einer vergleichsweise geringen Dichte unter gleichzeitiger Aufrechterhaltung der Ursprungseigenschaften des als Basisstoff eingesetzten Kunststoffes, beträgt der Volumen-Anteil der porösen Partikel des Füllstoffes zwischen 10 % und 60 %, vorzugsweise zwischen 20 % und 40 %. So spielt für Formteile im Innenbereich eines Kraftfahrzeuges, wie beispielsweise für Gehäuse von Wärmetauschern, Kühlern, Klimaanlagen, Luftzufuhranlagen und/ oder Wasserkästen, eine hinreichende Formsteifigkeit und Wärmestandfestigkeit eine besondere Rolle.

Um eine besonders leichte Durchmischung der Partikel des Füllstoffes mit dem als Basisstoff vorgesehenen Kunststoff zu ermöglichen, sollte die Form der Partikel des Füllstoffes in besonderem Maße eine gleichmäßige Verteilung in der sog. Kunststoffmatrix begünstigen und insbesondere eine Aggregation, Clusterbildung und/ oder Sedimentation verhindern. Daher weisen die Partikel des Füllstoffes zweckmäßigerweise eine regelmäßige Polyederform oder vorzugsweise eine Kugelform auf. Denn Kugeln haben das kleinste Verhältnis zwischen Oberfläche und Volumen. Die infolge dessen gering gehaltene Wechselwirkung der kugelförmigen Partikel des Füllstoffes miteinander oder mit der Kunststoffmatrix führt dabei dazu, dass der Durchmischungseffekt erleichtert wird. Damit wird beispielsweise ein Verstopfen der Spritzdüse bzw. der Extruderschnecke vermieden. Auch werden im Endeffekt räumlich uneinheitliche Eigenschaften des Formteiles, wie zum Beispiel Festigkeitsunterschiede, unterbunden.

Zur Erhöhung der Festigkeit läßt sich zweckmäßigerweise der gezielte Einsatz von orientierungsfähigen Formen, wie vorteilhafterweise von Hohlfasern, nutzen.

Zur dichten Ausgestaltung eines zu fertigenden Formteiles weisen die Partikel des Füllstoffes zweckmäßigerweise eine durchschnittliche Partikelgröße auf, die an eine vorgegebene Minimalwandstärke des zu fertigenden Formteiles angepasst ist. Vorteilhafterweise beträgt die durchschnittliche Partikelgröße 1/3 oder 1/2 der Wandstärke.

Um die Partikel des Füllstoffs bei der Plastifizierung nicht zu zerstören, ist die durchschnittliche Größe der porösen Partikel zweckmäßigerweise an die Extruderschnecke oder die Plastifiziereinheit der Spritzgießmaschine angepasst. Dazu ist die durchschnittliche Partikelgröße der porösen Partikel des Füllstoffes in Kugelform vorteilhafterweise kleiner als 1 mm, vorzugsweise zwischen 0,2 mm und 0,9 mm gewählt. Für das Versetzen des Werkstoffs für Formteile mit zusätzlichen Eigenschaften von langfaserverstärkten Werkstoffen sind die Maße der Partikel des Füllstoffes in Faserform vorteilhafterweise mit einer Länge zwischen 3 und 15 mm sowie einem Durchmesser zwischen 5 und 50 µm gewählt.

Die Partikel des Füllstoffes in Faserform mit offenen Querschnittsformen halten das Phasenwechselmaterial aufgrund ihrer vergleichsweise kleinen Abmessungen vorzugsweise über Adhäsion, Kohäsion und/oder Kapillarkräfte. Als offene Querschnittsformen kommen dabei beispielsweise eine U- oder eine W-Form in Betracht.

Um das Phasenwechselmaterial insbesondere beim thermischen Verarbeitungsprozess mit dem als Basisstoff vorgesehenen Kunststoff zu schützen, ist es vorteilhafterweise gegenüber dem Kunststoff verkapselt. Der Kapselwerkstoff sollte dabei den Temperaturen bei der Verarbeitung widerstehen können.

Damit die Hohlräume der Partikeln des Füllstoffes beim Einbringen in den Kunststoff nicht unerwünschterweise durch den bei dieser Verarbeitung verflüssigten oder erweichten Kunststoff ausgefüllt werden und beispielsweise das Phasenwechselmaterial verdrängen, weisen die Füllstoff-Partikel alternativ zweckmäßigerweise gegenüber dem Kunststoff eine geschlossenporige Struktur auf.

Für den Werkstoff, der anschließend spritzgegossen oder extrudiert werden soll, ist als Kunststoff vorzugsweise ein Thermoplast, ein Duroplast oder ein Elastomer eingesetzt. Als Thermoplast kommt insbesondere Acrylnitril-Butadien-Styrol-Copolymerisat, Acrylnitril-Styrol-Acrylester-Copolymer, Cellulose-acetat, Celluloseacetobutyrat, Ethylen-Vinylacetat, Tetrafluorethylen-Hexafluorethylen-Copolymer, Polyarylamid, Polyamidimid, Polyacrylnitril, Polyarylat, Polyamid, Polybutylentherephtalat, Polycarbonat, Polyethylen, Polyetherimid, Polyetherketon, Polyethersulfon, Polyethylentherephtalat, Perfluoralkoxy Copolymer, Polyaminobismeleinimid, Polymethylmethacrylat, Polyoxymethylen, Polypropylen, Polyphenylenether, Polyphenylenoxid, Polyphenylensulfid, Polystyrol, Polysulfon, Polytetrafluorethylen, Polychlortrifluorethylen, Polyvinylchlorid, Polyvinylidenchlorid, Polyvinylidenfluorid, Styrol-Acrylnitril Copolymer oder Styrol-Butadien Copolymer zum Einsatz. Als Duroplast wird insbesondere Epoxidharz, Melaminformaldehydharz, Melaminphenolharz, Phenol-Formaldehydharz, Polyurethanharz, Silikonharz, Ungesättigte Polyester, Hamstoff-Formaldehydharz oder Vinylesterharz eingesetzt. Während als Elastomer insbesondere Acrylatkautschuk, Polyesterurethan-Kautschuk, Butadien-Kautschuk, Chloropren-Kautschuk, Chlorsulfoniertes Polyethylen, Ethylen-Propylen-Dien Terpolymer, Ethylen-Vinylacetat Copolymer, Epoxidurethan Kautschuk, Fluorsilikonkautschuk, Fluorkautschuk, Isopren-Isobutylen Copolymer, Isoprenkautschuk, Methyl-Vinyl-Silikon Kautschuk, Acrylnitril-Butadien Kautschuk, Styrol-Butadien Kautschuk oder Polysulfid Kautschuk Verwendung findet.

Für einen besonders gering gehaltenen Herstellungsaufwand werden zweckmäßigerweise kommerziell erhältliche Produkte als Füllstoffe eingesetzt. Als bereits von Natur aus poröse Füllstoff-Partikel oder durch einen physikalischen oder chemischen Aufschäumvorgang gebildete poröse Füllstoff-Partikel sind vorzugsweise Glasschaumgranulat-Partikel, Glaskugeln mit einem Durchmesser kleiner 50 µm oder Aktivkohle-Partikel, Glasmehl, Gesteinsmehl, wie zum Beispiel Glimmer mit einem Durchmesser von ca. 3,0 µm, Perlith, Kreide, Calciumcarbonat mit einem Durchmesser von ca. 0,7 µm, Ton, Talkum, Alkalisilikat, Ammoniumsilikat und/ oder ein anderes Silikat oder ein anderer Mineralstoff eingesetzt.

Bezüglich des Formteiles wird die oben genannte Aufgabe gelöst, indem in einem als Basisstoff vorgesehenen Kunststoff mit einem Phasenwechselmaterial gefüllte Partikel eines Füllstoffes eingebettet sind.

Bezüglich des Verfahrens zur Herstellung eines Formteils wird die genannte Aufgabe gelöst, indem poröse Partikel eines Füllstoffes mit einem Phasenwechselmaterial versehen und in einen Kunststoff eingebracht werden sowie das daraus entstehende Gemisch als Werkstoff spritzgegossen, extrudiert, geschäumt oder anderweitig zu textilen und anderen Strukturen verarbeitet wird.

Füllstoff-Partikeln, die von Natur aus keine poröse Struktur aufweisen, kann beispielsweise entweder ein Treibmittel beigemengt werden, in ihnen gelöst oder in anderer Weise gebunden werden. Durch eine geeignete Veränderung der chemischen oder physikalischen Außenbedingungen wird das Treibmittel als Treibgas freigesetzt und bläht die Partikel des Füllstoffes auf. Systeme, wie in DE 199 09 077 A1 und DE 100 39 390 A1 und in den darin genannten Druckschriften beschrieben, greifen dieses Prinzip auf und wenden es zur Erzeugung von Silikatschäumen und Kunststoffschäumen an.

Bei Partikeln der Füllstoffe in Form von Hohlkugeln, Hohlfasern oder Mikrohohlfasem werden die Hohlräume mit einem Phasenwechselmaterial gefüllt. Das Füllen kann bei Hohlfasern beispielsweise über die Koextrusion von Phasenwechselmaterial in Hohlfasern erfolgen. Beim Trennen der gefüllten Fasern werden die Enden gequetscht und verschweißt und/oder auf andere Weise verschlossen. Dieser Vorgang kann z.B. in einer Zusatzeinheit nach dem Extruder oder der Plastifiziereinheit und vor dem Werkzeug erfolgen. Kurze Hohlfasern (mit einer Länge kleiner 3 mm) werden zweckmäßigerweise in flüssigem Phasenwechselmaterial, z.B. Paraffin, getränkt und damit gefüllt. Sollte die Oberflächenspannung zu groß sein, um die Hohlfasern füllen zu können, kann zweckmäßigerweise eine Verarbeitung im Vakuum gewählt werden. Fasern mit offenen Querschnittsformen (z.B. U, W) können aufgrund der kleinen Abmessungen in der Lage sein, durch Adhäsion und/oder Kohäsionskräfte das Phasenwechselmaterial in der flüssigen Phase zu halten.

Füllstoffe in Form vorgeschäumter Partikel, wie Silikate, Bims, Ton, Perlithe, Mineralschäume, Schaumglas u.a., werden zweckmäßigerweise mit einem Phasenwechselmaterial getränkt.

Verwendung kann das Formteil zweckmäßigerweise in allen Bereichen finden, in denen es um die effektive Speicherung von Energie aus der Umgebung geht. Daher ist das Formteil vorzugsweise als Klimaanlagengehäuse mit Speicherwirkung für Kälte und Wärme, als Luftkanal, Instrumententafel, Dekorteil, Verkleidungsteil im Fahrzeug, Dachhimmel, Seitenverkleidung, Sitzschale oder in HVAC-Anlagen (Heating/Heiz-, Ventilation/Ventilations-, Air Condition/Klima-, Cool/Kühl-Anlagen) eingesetzt.

Die mit der Erfindung erzielten Vorteile bestehen insbesondere darin, dass durch die Zugabe von porösen Partikeln eines Füllstoffes, die mit einem Phasenwechselmaterial gefüllt sind, zu einem als Basisstoff vorgesehenen Kunststoff Formteile mit thermischen Energiespeichereigenschaften bei einem vergleichsweise geringem Gewicht bereitgestellt werden können.

Gerade durch einen geeignet gewählten Volumen-Anteil der porösen Partikel des Füllstoffes ist eine Beibehaltung der günstigen Eigenschaften des als Basisstoff vorgesehenen Kunststoffes wie Bauteilsteifigkeit, Verzugsarmut und Wärmestandfestigkeit bei insgesamt verhältnismäßig geringer Dichte möglich. Die Verwendung von Füllstoff-Partikeln der genannten Form, Größe und Struktur mit einem Phasenwechselmaterial, das die Hohlräume ausfüllt, ermöglicht zusammen mit einem thermoplastischen, duroplastischen oder elastomeren Kunststoff eine dem jeweiligen Bedarf der Industrie genau angepasste und damit besonders effektive Vereinbarung von Umweltschutzanliegen durch Energieeinsparung und einer Komfortverbesserung durch die Kompensation von Temperaturschwankungen. Dabei werden die Festigkeitseigenschaften des aus diesem Werkstoff hergestellten Formteils beibehalten oder sogar verbessert.

Damit wird ein insgesamt besonders umweltfreundliches und komfortables Formteil mit einem breiten Anwendungsfeld, insbesondere im Innenbereich eines Kraftfahrzeugs, zur Verfügung gestellt.
Ein Ausführungsbeispiel der Erfindung wird im Folgenden anhand einer Zeichnung näher erläutert.

Darin zeigen:
- Figur 1: eine ausschnittsweise schematische Darstellung eines spritzgegossenen Formteils mit porösen Füllstoff-Partikeln, und
- Figur 2: eine ausschnittsweise schematische Darstellung eines spritzgegossenen Formteils mit porösen Füllstoff-Partikeln, wobei die Hohlräume der Partikel mit einem Phasenwechselmaterial gefüllt sind.

Gleiche Teile sind in allen Figuren mit denselben Bezugszeichen versehen.

Das spritzgegossene Formteil 1 weist als Basisstoff 2 einen thermoplastischen Kunststoff auf, der sich aufgrund seiner plastischen Eigenschaften in der Wärme besonders für Verarbeitungstechniken wie das Spritzgießen oder Extrudieren eignet. Diese Verarbeitungstechniken ermöglichen abhängig von der vorgegebenen Düsenform des jeweiligen Werkzeuges die Herstellung entsprechend beschaffener Formteile 1. Die besonders guten Formgebungseigenschaften erleichtern eine besonders hohe Passgenauigkeit im jeweiligen Verwendungsbereich, beispielsweise beim Verbau in einem Kraftfahrzeug.

Das spritzgegossene Formteil 1 weist zusätzlich zum Basisstoff 2 darin eingebettete Partikel 4 eines Füllstoffes auf. Diese Partikel 4 bestimmen die spezifischen Eigenschaften des spritzgegossenes Formteiles 1 mit. Die Partikel 4 sind daher in besonderem Maße für eine Verwendbarkeit des spritzgegossenen Formteiles 1 auf dem Gebiet der Automobilindustrie ausgelegt. Dafür sind die Partikel 4 derart ausgebildet, dass das daraus gefertigte Formteil 1 den in der Automobilindustrie gestellten Anforderungen bezüglich des Gewichts Rechnung trägt. Diese bestehen nämlich darin, ein außerordentlich leichtes Formteil 1, beispielsweise für das Gehäuse von Klimaanlagen oder Luftzufuhranlagen einsetzen zu können.

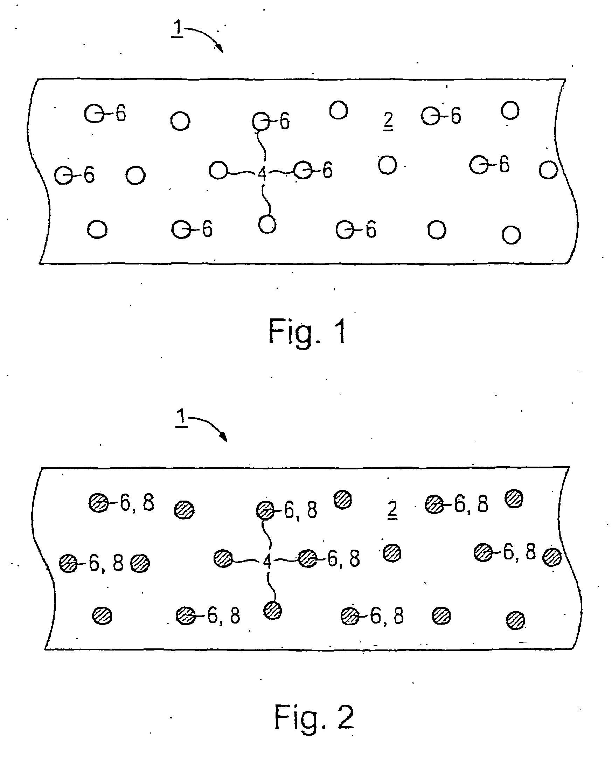

Zu diesem Zweck sind die im Basisstoff 2 des spritzgegossenen Formteils 1 eingebetteten Partikel 4 des Füllstoffes porös. Die Partikel 4 weisen also Hohlräume 6 auf, wie in Figur 1 gezeigt, die entweder von Natur aus gegeben sind oder die durch einen oben beschriebenen Aufschäumvorgang bei dazu geeigneten Partikeln 4 erzeugt sind. Ein solches spritzgegossenes Formteil ist bereits aus der DE 102 36 509 bekannt.

Um dem Interesse der Einsparung von Energie und ihrem bedarfsweisen Einsatz gerecht zu werden, sind die Hohlräume 6 der Partikel 4 des Füllstoffs in besonderem Maße dafür ausgestattet und genutzt. Die Ausstattung der Hohlräume 6 besteht darin, dass sie mit einem Phasenwechselmaterial 8, wie zum Beispiel Paraffin oder Salz-Hydrate versehen sind. Denkbar ist aber auch jedes andere Material, das ab einem bestimmten Temperaturniveau seinen Aggregatzustand ändert und dabei beispielsweise überschüssige Wärme aus der Umgebung speichert ohne seine Oberflächentemperatur zu erhöhen und die gespeicherte Wärme später beim Abkühlen wieder freigibt.

Ein solches spritzgegossenen Formteil 1 mit Partikeln 4, deren Hohlräume 6 mit einem Phasenwechselmaterial 8 gefüllt sind, ist in Figur 2 gezeigt. Zur Veranschaulichung der Ausfüllung des jeweiligen Hohlraums 6 mit dem Phasenwechselmaterial 8 ist es schraffiert dargestellt.

Gerade durch die Wahl eines Volumen-Anteils der porösen Partikel 4 des Füllstoffes von 40 % im Ausführungsbeispiel ist sowohl eine Beibehaltung der vorteilhaften Eigenschaften bezüglich Formsteifigkeit als auch eine besonders geringe Dichte und damit ein besonders geringes Gewicht des spritzgegossenen Formteiles 1, zum Beispiel eines Gehäuses von Klimaanlagen erreicht. Für den Einsatz beispielsweise für Gehäuse von Wärmetauschern, Kühlern, Luftzufuhranlagen, Wasserkästen und/ oder für ein beliebiges anderes Formteil 1 im Innenbereich eines Kraftfahrzeuges beträgt der Volumen-Anteil der porösen Partikel 4 bedarfsweise zwischen 10 % und 60 %.

Damit die porösen Partikeln 4 des Füllstoffes nicht durch den als Basisstoff 2 vorgesehenen Kunststoff ausgefüllt werden, werden geschlossenporige Partikel 4 des Füllstoffes eingesetzt, die diese Struktur von Natur aus aufweisen oder die diese durch entsprechende Behandlung, wie beispielsweise in der Druckschrift DE 199 09 077 A1 beschrieben, erhalten.

Um das Phasenwechselmaterial 8 insbesondere beim thermischen Verarbeitungsprozess-mit dem als Basisstoff vorgesehenen Kunststoff zu schützen ist es vorteilhafterweise gegenüber dem Kunststoff verkapselt. Der Kapselwerkstoff sollte dabei den Temperaturen bei der Verarbeitung widerstehen können.

Die im Ausführungsbeispiel gezielte Verwendung von porösen Partikeln 4 mit einer Kugelform erleichtert eine Durchmischung der Partikel 4 des Füllstoffes mit dem als Basisstoff 2 vorgesehenen Kunststoff. Dies vermeidet gleichzeitig in besonderer Weise eine unerwünschte Aggregation, Clusterbildung und/ oder Sedimentation der Partikel 4 des Füllstoffes in der sog. Kunststoffmatrix. Denkbar als Partikelform sind allerdings auch eine regelmäßige Polyederform oder eine Faserform, die speziell zur Erhöhung von Festigkeitseigenschaften gewählt wird.

Anschließend wird der mit den mit dem Phasenwechselmaterial 8 gefüllten Partikeln 4 versehene Kunststoff als Spritzguss-Werkstoff durch die eingangs kurz beschriebene übliche Behandlung beim Spritzgießen in eine gewünschte Form gebracht und somit zu besonders passgenauen Formteilen 1 verarbeitet. Um die Partikel 4 des Füllstoffes bei der Plastifizierung im Spritzgieß-Werkzeug nicht zu zerstören, ist die durchschnittliche Größe der Partikel 4 an das Spritzgieß-Werkzeug angepasst und ist daher kleiner als 1 mm. Ferner ist die durchschnittliche Partikelgröße zur dichten Ausgestaltung eines zu fertigenden Formteiles 1 an eine vorgegebene Minimalwandstärke des betreffenden Formteiles 1 insoweit angepasst, als das die durchschnittliche Partikelgröße vorzugsweise 1/3 oder 1/2 der Wandstärke beträgt.

Im Ausführungsbeispiel beträgt die durchschnittliche Partikelgröße des Füllstoffes 0,9 mm bei einer Minimalwandstärke von 1,8 mm bei einem zum Beispiel ein Klimaanlagengehäuse bildendes Formteil 1. Die Minimalwandstärke anderer Formteile 1 eines Kraftfahrzeuges beträgt üblicherweise zwischen 1 mm und 2 mm, so dass eine besonders günstige durchschnittliche Partikelgröße des Füllstoffes in einer Größenordnung zwischen 0,2 mm und 0,9 mm liegt.

Die Darstellung der Komponenten des verhältnismäßig leichten und mit thermischen Energiespeichereigenschaften ausgerüsteten spritzgegossenen Formteiles 1 gilt selbstverständlich gleichermaßen für ein extrudiertes oder anderweitig geformtes Formteil 1 mit den entsprechenden Eigenschaften. Der Unterschied besteht nur in der Verarbeitung des Werkstoffs. Für den jeweiligen Formgebungsprozess, dem das Formteil 1 unterzogen wurde, sind daher die geeigneten Betriebsparameter gewählt.

## Patentansprüche

1. Formteil (1) aus einem Werkstoff, bei dem einem als Basisstoff (2) vorgesehenen Kunststoff poröse Partikel (4) eines Füllstoffes beigemischt sind, wobei Hohlräume (6) der Partikel (4) mit einem Phasenwechselmaterial (8) gefüllt sind, **dadurch gekennzeichnet, dass**
das Phasenwechselmaterial in den Hohlräumen (6) der Partikel (4) jeweils beim Überschreiten und Unterschreiten eines bestimmten Temperaturniveaus seinen Aggregatzustand ändert, wobei die Phasenwechseltemperatur des Phasenwechselmaterials zwischen 18°C und 26°C liegt.

2. Formteil nach Anspruch 1, bei dem der Volumen-Anteil der Partikel (4) des Füllstoffes zwischen 10 % und 60 % beträgt.

3. Formteil nach Anspruch 1 oder 2, bei dem die Partikel (4) des Füllstoffes eine regelmäßige Polyederform, eine Kugelform oder eine Faserform aufweisen.

4. Formteil nach einem der vorhergehenden Ansprüche, bei dem die Partikel (4) des Füllstoffes in ihrer durchschnittlichen Partikelgröße an eine vorgegebene Minimalwandstärke eines zu fertigenden Formteiles (1) angepasst sind.

5. Formteil nach einem der vorhergehenden Ansprüche, bei dem die Partikel (4) des Füllstoffes in Kugelform eine durchschnittliche Partikelgröße kleiner 1 mm aufweisen.

6. Formteil nach einem der Ansprüche 1 bis 4, bei dem die Partikel (4) des Füllstoffes in Faserform eine Länge zwischen 3 und 15 mm sowie einen Durchmesser von 5 bis 50 µm aufweisen.

7. Formteil nach Anspruch 6, bei dem die Partikel (4) des Füllstoffes in Faserform mit offenen Querschnittsformen das Phasenwechselmaterial (8) über Adhäsion, Kohäsion und/oder Kapillarkräfte halten.

8. Formteil nach einem der vorhergehenden Ansprüche, bei dem das Phasenwechselmaterial (8) gegenüber dem Kunststoff verkapselt ist oder bei dem die Partikel (4) des Füllstoffes gegenüber dem Kunststoff eine geschlossenporige Struktur aufweisen.

9. Formteil nach einem der vorhergehenden Ansprüche, bei dem als Kunststoff ein Thermoplast, ein Duroplast oder ein Elastomer eingesetzt ist.

10. Formteil nach einem der vorhergehenden Ansprüche, bei dem als Partikel (4) des Füllstoffes Glasschaumgranulat-Partikel, Glaskugeln oder Aktivkohle-Partikel, Glasmehl, Gesteinsmehl, Kalk, Ton, Talkum, Alkalisilikat, Ammoniumsilikat und/ oder ein anderer Mineralstoff oder ein anderes Silikat eingesetzt ist.

11. Verwendung eines Formteils (1) nach einem der Ansprüche 1 bis 10 als Klimaanlagengehäuse mit Speicherwirkung für Kälte und Wärme, als Luftkanal, Instrumententafel, Dekorteil, Verkleidungsteil im Fahrzeug Dachhimmel, Seitenverkleidung, Sitzschale oder in Heiz-, Ventilations-, Klima- und Kühl-Anlagen (sog. HVAC-Anlagen).

## Claims

1. A moulded part made of a material in which porous particles (4) of a filler material are added to a resin provided as a base material, cavities (6) in said particles (4) being filled with a phase change material (8),
**characterised in that**
the physical state of the phase change material in the cavities (6) of the particles (4) changes whenever it falls below or rises above a certain temperature level, the phase change temperature of the phase change material lying between 18°C and 26°C.

2. A moulded part in accordance with claim 1,
in which the volume percent of the parties (4) of the filler material ranges from 10% to 60%.

3. A moulded part in accordance with claim 1 or 2,
in which the particles (4) of the filler material have a regular polyhedral, conical or fibre shape.

4. A moulded part in accordance with one of the preceding claims,
in which the mean particle size of the particles (4) of the filler material are adapted to a predetermined minimum wall thickness of a moulded part (1) to be manufactured.

5. A moulded part in accordance with one of the preceding claims,
in which when conical in shape the particles (4) of the filler material have a mean particle size of less than 1 mm.

6. A moulded part in accordance with one of claims 1 to 4,
in which when fibre-shaped the particles (4) of the filler material have a length of between 3 and 15 mm and a diameter of between 5 and 50 µm.

7. A moulded part in accordance with claim 6,
in which when fibre-shaped with an open cross-sectional shape the particles (4) of the filler material hold the phase change material by adhesion, cohesion and/or capillary forces.

8. A moulded part in accordance with one of the preceding claims,
in which the phase change material (8) is encapsulated in respect of the resin or in which the particles (4) of the filler material have a closed-pore structure in respect of the resin.

9. A moulded part in accordance with one of the preceding claims,
in which a thermoplastic, a duroplastic or an elastomer is utilised as the resin.

10. A moulded part in accordance with one of the preceding claims,
in which glass foam granulate particles, glass beads or activated carbon particles, glass powder, rock flour, lime, clay, French chalk, alkali silicate, ammonium silicate and/or another mineral material are used as the particles (4) of the filler material.

11. The application of a moulded part (1) in accordance with one of claims 1 to 10 as an air conditioner housing with a cold and heat storage effect, as air ducts, instrument panels, decorative parts, vehicle trim, roof liner, lateral trim, seat shell or in heating, ventilation, air conditioning and cooling systems (so-called HVAC systems).

## Revendications

1. Objet moulé (1) dans une matière, dans lequel une matière plastique prévue comme matériau de base (2) et les particules poreuses (4) d'un matériau de remplissage sont mélangées, les cavités (6) des particules (4) étant remplies d'un matériau à changement de phase (8), **caractérisé en ce que** le matériau à changement de phase dans les cavités (6) des particules (4) change à chaque fois d'état d'agrégation en dépassant et en repassant sous un niveau de température déterminé, la température de changement de phase du matériau à changement de phase étant comprise entre 18°C et 26°C.

2. Objet moulé selon la revendication 1, dans lequel la part en volume des particules (4) du matériau de remplissage est de 10 % à 60 %.

3. Objet moulé selon la revendication 1 ou 2, dans lequel les particules (4) du matériau de remplissage présentent une forme polyédrique, une forme sphérique ou une forme filamentaire.

4. Objet moulé selon l'une quelconque des revendications précédentes, dans lequel les particules (4) du matériau de remplissage présentent une taille de particules moyenne adaptée à une épaisseur de paroi minimale prédéterminée d'un objet moulé à préparer (1).

5. Objet moulé selon l'une quelconque des revendications précédentes, dans lequel les particules (4) du matériau de remplissage de forme sphérique présentent une taille de particules moyenne inférieure à 1 mm.

6. Objet moulé selon l'une quelconque des revendications 1 à 4, dans lequel les particules (4) du matériau de remplissage de forme filamentaire présentent une longueur comprise entre 3 et 15 mm, ainsi qu'un diamètre de 5 à 50 *µ*m.

7. Objet moulé selon la revendication 6, dans lequel les particules (4) du matériau de remplissage de forme filamentaire sont maintenues avec les formes de coupe transversale ouverte du matériau à changement de phase (8) par adhésion, cohésion et/ou force de capillarité.

8. Objet moulé selon l'une quelconque des revendications précédentes, dans lequel le matériau à changement de phase (8) est encapsulé contre la matière plastique ou dans lequel les particules (4) du matériau de remplissage présentent une structure à pores fermés contre la matière plastique.

9. Objet moulé selon l'une quelconque des revendications précédentes, dans lequel la matière plastique revêt la forme d'une matière thermoplastique, d'une résine thermodurcissable ou d'un élastomère.

10. Objet moulé selon l'une quelconque des revendications précédentes, dans lequel les particules (4) du matériau de remplissage revêtent la forme de particules de granulat de mousse de verre, de billes de verre ou de particules de charbon activé, de poudre de verre, de poudre de roche, de calcaire, d'argile, de talc, de silicate alcalin, de silicate d'ammonium et/ou d'une autre substance minérale ou d'un autre silicate.

11. Utilisation d'un objet moulé (1) selon l'une quelconque des revendications 1 à 10 comme logement de climatiseur ayant un effet de conservation du chaud et du froid, comme conduit à air, tableau de bord, élément de décor, élément d'habillage d'un véhicule, ciel de toit, habillage latéral, revêtement de siège ou dans les dispositifs de chauffage, ventilation, climatisation et réfrigération (dispositifs dits CVCR).
